# EUROPEAN PATENT APPLICATION

(11) **EP 3 680 219 A1**
(43) Date of publication of application: **15.07.2020**
(21) Application number: 19151531.1
(22) Date of filing: 11.01.2019
(51) Int. Cl.: C02F 1/30, C02F 101/16, C02F 103/20

(54) **APPARATUS FOR TREATING SEWAGE AND WASTE MATERIAL**

(71) Applicant: PuraSystem AG, 8602 Wangen (CH)
(72) Inventor: SONEGO, Alessandro, 33070 33070 Brugnera (PN) (IT); ZULLI, Fabio, 65129 Pescara (PE) (IT)
(74) Representative: Rutz & Partner

(57) **Abstract**

The apparatus (123), which serves for treating a process material, such as sewage or animal waste, and for removing ammonia therefrom, comprises a reactor (2) with
- at least one microwave unit (8A, 8B) including at least one microwave generator (81) provided for transferring microwave energy to the process material, and
- at least one vessel (20) having
- at least one inlet opening (201, 205) for receiving the process material;
- at least one outlet opening (202, 203) for removing or circulating the treated process material; and
- at least one exit channel (204) for removing ammonia enriched gases stripped from the process material.

According to the invention at least one transfer tube (25) is provided,
- which is made from microwave-transmissible material;
- which is connected with a 1st end (251) to one of the outlet openings (202) of the vessel (20);
- which is connected with at least one 2nd end (252) to one of the inlet openings (205) of the vessel (20); and
- which is arranged at least partially in front of the microwave unit (8A, 8B) so that microwave energy is transferable to the transferred process material; and that
a pump (63) is provided, with which the process material is transferable through the at least one transfer tube (25).

## Description

The present invention relates to an apparatus for treating a process material, such as sewage and waste, particularly animal waste, in order to remove ammonia.

### BACKGROUND OF THE INVENTION

According to [1], Susan W. Gay, et al., Ammonia Emissions and Animal Agriculture, Virginia State University 2009, agricultural producers are under constant pressure to minimize the impact their management practices have on the environment. Although most environmental concerns related to animal agriculture have focused on water quality during the past two decades, air quality issues have become an increasing concern. Odours have been the main air quality concern related to agricultural animal production. However, ammonia emissions from livestock and poultry operations have recently received significant attention. New air quality standards that cover ammonia emissions in the United States were adopted in 1997. These regulations have a significant impact on the animal production operations. Ammonia (NH₃) is a common by-product of animal waste due to the often inefficient conversion of feed nitrogen into animal product. The microbial decomposition of animal wastes is the main source of ammonia volatilization from animal feeding operations.

According to [2], Li Lin et al., Removal of ammonia nitrogen in wastewater by microwave radiation, Journal of Hazardous Materials, ELSEVIER, Amsterdam 2009, ammonia nitrogen contaminated wastewater poses a great threat on the safety of water resources.

Hence, numerous processes for removing ammonia from sewage and waste material have been developed.

Removal of ammonia nitrogen in wastewater by microwave radiation is described in [2].
[3], Italian Patent B8152636 describes an apparatus for sewage treatment or waste that comprises a plurality of microwave generators used for subjecting the sewage or waste present inside a tank to a temperature raising treatment.
[4], EP2743234B1, describes a further apparatus for the treatment of sewage or waste contained in a tank with microwave energy. In this apparatus a blowing device is provided, which transfers thermal energy dissipated by the microwave generators, which are mounted within a cooling circuit, into the tank.

In the apparatus disclosed in [3], the microwave generators are directly connected to a main vessel, in which the waste material is exposed to the various treatments of mixing, aeration, heating by conventional heating elements and heating by microwave energy. This apparatus has the disadvantage that the microwave system is coupled to the bottom of the main vessel and is therefore firmly integrated into the system. Efficiency of the application of microwave energy by radiation from one side, i.e. the bottom side only, appears to be rather low, since only a minor part of the process material is exposed to microwave energy. On the other hand maintenance of the system may be cumbersome, since accessing the microwave generators integrated into the bottom of the main vessel may be difficult. Furthermore, spacious waveguides may be required to transfer the microwave energy from the microwave generators to the main vessel.

In the apparatus disclosed in [4], the tank with the microwave generators is an auxiliary tank, which is connected to a main vessel in which the waste material is exposed to the various treatments of mixing, aeration and heating by conventional heating elements. Hence, the waste is circulated from the main vessel through the auxiliary tank, there exposed to microwave energy, and returned back to the main vessel. Using an auxiliary tank has the advantage that this auxiliary tank can easily be removed. However maintenance of the auxiliary tank is even more cumbersome, since the microwave generators are integrated into the cooling circuit and into the auxiliary tank. Furthermore, using an auxiliary tank requires considerable space externally to the main vessel and is of limited effect. In the event that the effect of microwave radiation should be enhanced an auxiliary tank with larger size would be required, which would cause considerable costs and require even more space.

In both apparatuses of [3] and [4] the extraction of gaseous ammonia dissolved from the sewage is performed with rather low efficiency. Further, lack of purity of the extracted material may obstruct further processing or may cause clogging of transfer lines. Problems of this kind may typically be caused by foam that occurs when process material is treated.

Furthermore, the apparatuses of [3] and [4] are operated according to the experience of the operator. I.e., during the operation of the apparatuses the process cycles are evaluated and process parameters are gathered for best results achieved. However, this evaluation procedure is cumbersome. Further changes in the process material, ambient conditions or changes in the apparatuses may lead to suboptimal results.

### SUMMARY OF THE INVENTION

It is therefore a primary object of the present invention to provide an improved apparatus with microwave generators for treating a process material, particularly sewage or waste, in order to remove ammonia or other gaseous components. Particularly, it is an object of the present invention to provide an apparatus which allows efficient use of microwave generators and microwave energy produced.

Interaction of functional elements contributing to the process of stripping ammonia shall be improved so that efficiency of the process is increased.

The process shall provide optimum results preferably without interaction of the operator.

Furthermore, the handling of process material in solid, liquid or gaseous form shall be improved so that contamination of the apparatus and device parts and possibly plugging of transfer lines is avoided.

Compared to data storage capacity, the apparatus shall have relatively small dimensions so that maximum space is provided for storing process material, while less space is required for parts and elements of the apparatus.

The application of microwave energy shall be scalable so that for every application the required level of microwave energy can be provided. Such scalability shall be realized without major structural changes of the apparatus and without a substantial increase of the dimensions of the apparatus and at a minimal cost.

Repair of the apparatus, particularly in the event that a microwave generator fails, shall be executable conveniently in the shortest possible time.

Routine maintenance, such as cleaning of functional parts of the apparatus, shall be executable conveniently as well.

Execution of repair work and routine maintenance shall be executable without getting in contact with process material. Furthermore, the structure of the apparatus shall be simplified so that the apparatus can be produced at relatively low cost. Microwave guides for transferring microwave energy shall be avoided or limited to adapting purposes.

The above and other objects of the present invention are achieved by an apparatus as defined in claim 1. Preferred embodiments of the apparatus are defined in further claims.

The apparatus, which serves for treating a process material, such as sewage or animal waste, and for removing ammonia therefrom, comprises a reactor with
- at least one microwave unit including at least one microwave generator provided for transferring microwave energy to the process material, and
- at least one vessel having
- at least one inlet opening for receiving the process material;
- at least one outlet opening for removing or circulating the treated process material; and
- at least one exit channel for removing ammonia enriched gases stripped from the process material.

According to the invention at least one transfer tube is provided,
- which is made from microwave-transmissible material;
- which is connected with a 1st end to one of the outlet openings of the vessel;
- which is connected with at least one 2nd end to one of the inlet openings of the vessel;
- which is arranged at least partially in front of the microwave unit so that microwave energy is transferable to the transported process material; and
that a first pump is provided, with which the process material is transportable through the at least one transfer tube.

The inventive apparatus has various advantages. By using a transfer tube made from microwave-transmissible material the flow of the circulated process material is separated from the microwave unit, while electromagnetic coupling is maintained. This allows the arrangement of at least one microwave unit at any suitable position adjacent to the transfer tube. Since there is no direct mechanical connection to the transfer tube required, the microwave units can be conveniently mounted and dismounted from the apparatus in order to perform maintenance work, repair work or in order to increase or decrease the capacity of the microwave system.

The microwave-transmissible transfer tube is preferably made from pressure resistant and temperature resistant materials such as Teflon ®, polypropylene, polymethylpentene, polysulfone, polyetherimide or any other microwave-transmissible polymer. Such materials may be used for creating a transfer tube or transfer hose in any suitable form. Most preferably a coiled transfer tube with a plurality of windings is used through which the process material can be pumped from an outlet opening to an inlet opening of the vessel. More preferably the microwave-transmissible transfer tube is made of elastic material that allows bending and coiling the transfer tube as required.

Sewage and animal waste have strongly polar molecules such as H₂O and NH₃. The irradiating microwave energy therefore causes a rapid rise in temperature of the process material inside the transfer tube and supports the reactions occurring therein, thus accelerating the stripping process.

In a preferred embodiment of the invention the transfer tube is coiled around the vessel with a plurality of windings. Hence, the whole circumferential area of the vessel can be covered by the transfer tube with minimum space requirement. Factually, during operation of the apparatus a relatively small layer of process material is drawn around the vessel, which can be charged with microwave energy across the whole diameter. The transferred process material can therefore be treated over a large area with highest efficiency. From this large area any section can be selected and exposed to active microwave generators. The inventive apparatus allows therefore a high scalability of applied microwave generators and microwave energy. According to the requirements of the specific application any suitable number of microwave units can be mounted and/or activated. It is also possible to mount backup microwave units, so that, even during operation, one microwave unit can be dismounted for maintenance purposes, while the backup unit is activated.

Since the transfer tube is surrounding the vessel with minimum space requirement, a housing with small dimensions can be provided for encasing the vessel with the installed transfer tube. Since the transfer tube extends continuous and uninterrupted from an outlet to inlet of the vessel, the whole transfer tube can be made from a single tube element that exhibits the same cross-section over the whole length. The housing may comprise a single lateral wall adapted to the dimensions or geometry of the vessel. In the event that the vessel has a cylindrical form, then preferably a housing with the form of a polygonal cross-section, preferably hexagonal or octagonal cross-section is used. Such a housing has a plurality of planar sidewalls, which are inclined relative to one another by a corresponding angle. The sidewalls may be mounted fixed or removable.

Each sidewall preferably comprises fixed or removable wall segments. At least one, preferably a plurality of the sidewalls or wall segments comprises at least one window each, through which microwave energy can pass through to the transfer coil. The windows are preferably provided with adjacent flange elements on which a microwave unit can be mounted such, that microwave energy generated by the microwave sources is traversing the window towards the transfer tube and preferably the longitudinal axis of the vessel. In the event that removable sidewalls or wall segments are present, then a sidewall or wall segment, which does not have a window, may be replaced by one with a window, whenever an additional microwave unit is required.

One, two or more microwave units, each provided with one or more microwave sources, can therefore be mounted on the outside of the reactor on fixed or removable housing walls or wall segments. The microwave units are therefore easily accessible from the outside, wherefore maintenance work, repair or unit exchanges can easily be executed.

As described above, apparatuses for stripping ammonia from a process material are known from prior art. The inventive apparatus, i.e. the reactor, can be combined with any functional device used in apparatuses of the prior art such as means for mixing and/or heating and/or aeration and/or circulation of the process material. Such means or devices may be arranged within or outside the reactor vessel or neighbouring tanks located in the process chain before or after the reactor.

In a further preferred embodiment the 2nd end of the transfer tube or a nozzle connected thereto and a gas pipe or gas conduit, that is connected to a gas pump located outside of the vessel, are extending into a diffusion zone inside the vessel, into which recirculated process material is sprayed and mixed with an airflow. The air flow or gas flow brushes the liquid and facilitates the transfer of ammonia dissolved from the process material to the air or gas, allowing its effective removal. To reduce the boundary layer and, at the same time, to maximize the area of interaction, one or more nozzles are used that spray the liquid process material into the diffusion zone, where it is traversed by the gas stream. In this way the drops of the process material are immersed in the air or gas, ensuring a small boundary layer due to turbulence caused by the gas flow and a large exchange surface given by the surface of the drops. In this way, the process material is mixed with air or gas and is releasing ammonia before it falls down inside the vessel, where it is kept at a desired temperature by a heat exchanger.

This method of aeration or air insufflation is, moreover, a first method of isolation of foam produced during the stripping process. This has the advantage that ammonia is set free and can be extracted, while foam and liquid particles of the process material remain in the vessel.

The process material then exits from the bottom of the vessel to be further recirculated until the nitrogen contained therein or the ammonia concentration in the extracted gases has decreased below a predetermined level. Such levels can be measured by suitable sensors. Ammonia sensors are available for example from GfG instrumentation, Ann Arbor, MI 48108, USA (see https://goodforgas.com/). Properties of ammonia and suitable ammonia sensors for different fields of application are described in [5], "Understanding ammonia sensors and their applications" published by GfG instrumentation (AP1002 2-25-13).

In a further preferred embodiment a gas pump, particularly a fan, is mounted at the top of the reactor, with which ammonia enriched gas is transferred via the exit channel towards an ammonia concentration tank.

In a further preferred embodiment a separator is provided adjacent to the exit channel which allows gas to pass through and which is rejecting foam, liquid or solid particles. This separator is provided with rotating elements, which are preferably arranged in the form of a basket and which are rejecting foam, liquid or solid particles, while gaseous ammonia can pass by.

Preferably the separator is rotated together with the fan so that the fan is drawing gas through the permeable separator into the exit channel, while the rotating separator, i.e. the rotating elements are expelling foam, solid and liquid parts of the process material by centrifugal force towards the sidewall of the vessel.

Solid and liquid parts of the process material are typically separated by gravitational force. However, foam, which may be produced by the insufflation of air within the diffusion zone, typically travels within the gas flow towards the exit channel.

In a preferred embodiment the separator, which preferably has a cylindrical or conical form, is composed in its lateral walls of a plurality of palettes or blades that are inclined relative to the cylindrical or conical shape of the basket and that are separated by gaps from one another, through which the gas can pass. So, the foam, which is sucked together with the gas, is rejected on the lateral walls of the rotating separator due to centrifugal force. In this way, foam is expelled towards the sidewall of the vessel, while only ammonia enriched gas is transported by the fan to the exit channel. The extracted ammonia enriched gas is conveyed into storage tanks to produce ammonia reusable in any technical field. This gas transport can be supported by further gas pumps.

The described reactor can be embedded in any apparatus that is used for treating a process material. However in preferred embodiments the inventive reactor is combined with improved primary and/or improved ternary process stages as described below.

In the improved primary process stage the process material to be treated is entered via a 1^{st} transfer line into a primary tank, in which it is mixed and/or heated and/or aerated and/or circulated, before it is forwarded via a 2^{nd} transfer line and possibly via a 1^{st} valve to one of the inlet openings of the vessel of the reactor located in the secondary stage.

The treated process material is forwarded from the vessel located in the secondary stage to a secondary tank located in a ternary process stage directly via a third transfer line or indirectly via a fourth transfer line and an intermediate tank. Hence, the vessel can be completely emptied after treatment of the process material has been completed. Alternatively, treated process material can continuously be transferred to the intermediate tank so that continuous operation of the apparatus is possible.

In a preferred embodiment, the first pump located at the lower end of the vessel is connected via an outlet line to a distributor,
a) which via a valve is directly connected to the transfer tube, and/or
b) which via a valve and a bio-crack unit is indirectly connected to the transfer tube, and/or
c) which is connected via a valve and the 3^{rd} transfer line to the secondary tank.

The process material can therefore be disposed from the vessel or circulated back into the vessel by exposing the process material to microwave energy and optionally to the bio-crack unit.

Bio-crack stands for any means suitable for electro-kinetic disintegration, maceration, milling or crushing elements or particles of the process material. Such bio-crack units are typically used in the 1st process stage and 2^{nd} process stage. Bio-crack units do not require large space and can easily be integrated into the apparatus. A bio-crack unit is for example described in [6], WO201887398A1.

In a further preferred embodiment, the 1^{st} tank is extending into the 2^{nd} tank. Preferably the lower end of the 1^{st} tank is immersed into the process material contained in the 2^{nd} tank so that thermal energy contained in the already treated process material is transferred to the untreated process material contained in the 1^{st} tank. Energy is therefore recuperated within the system.

In a further preferred embodiment the 1^{st} tank comprises a lower primary tank segment, into which the 1^{st} transfer line is extending and an upper secondary tank segment, in which a heat exchanger is arranged. Hence, the process material entering the primary tank segment is heated by the treated process material contained in the 2^{nd} tank. Process material that is preheated in the primary tank segment is then rising to the secondary tank segment and is heated to a further level. In this way the temperature difference between the temperature of the treated process material contained in the 2^{nd} tank and the untreated process material contained in the primary segment of the 1^{st} tank is kept at the highest level and is not impaired by the heat exchanger contained in the secondary part of the 1^{st} tank. This arrangement allows designing the 1^{st} process stage and the 3^{rd} process stage of the apparatus with highest efficiency and lowest dimensions. As an alternative, the primary tank segment and the secondary tank segment of the 1^{st} tank could be realized as separate tanks.

In preferred embodiments, the apparatus a control unit with a software program is provided, with which the process is automatically controllable in one, more or all stages. In this way, the process can be optimized practically without interaction of the operator.

The transfer of the process material between the process stages and tanks and vessels can be effected by pumps or wherever possible by gravitational force. The flow of process material and/or gas can further be controlled by valves. Preferably all motors, pumps, valves, heaters and any further device parts are controllable by a control unit, which is controlling the complete process of stripping ammonia, although it is also possible to install functional devices that are operated manually.

In order to control the process various sensors are present in the apparatus with which preferably all relevant process parameters, such as temperatures of the process material in the liquid phase or gaseous phase and preferably the statuses of all device parts can be measured. Most important is the measurement of the quality of the stripped gases, particularly the ammonia concentration, which is used as an indicator for the condition of the treated process material. Depending on these measurements the control unit can automatically decide whether the liquid or gaseous process material in the respective stage requires further circulation or can be transported further.

### BRIEF DESCRIPTION OF THE DRAWINGS

Some of the objects and advantages of the present invention have been stated, others will appear when the following description is considered together with the accompanying drawings, in which:

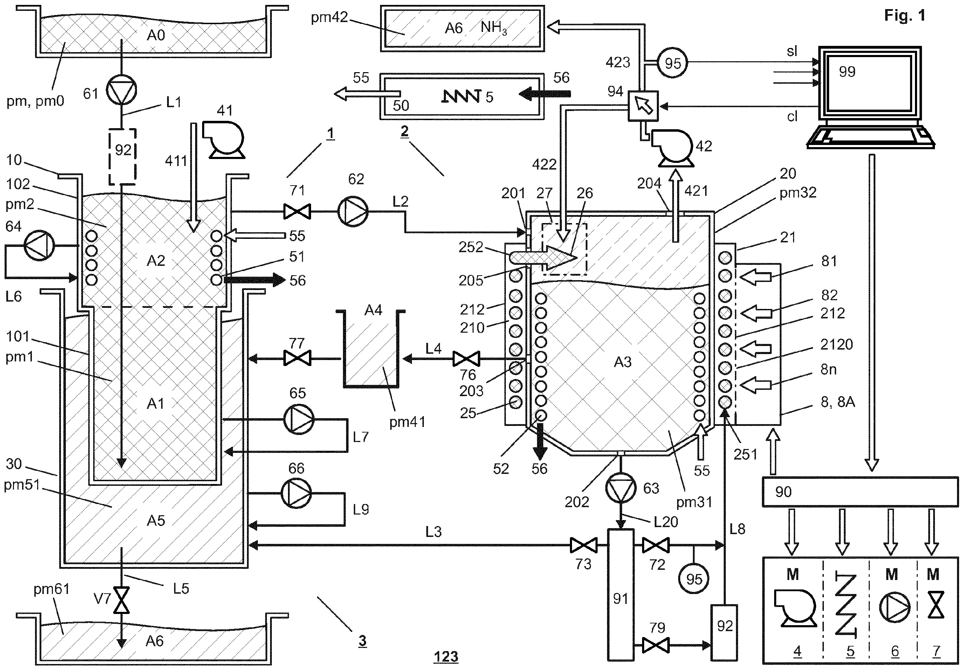

- Fig. 1: shows schematically an inventive apparatus 123 that comprises a 1^{st} process stage 1, in which the process material is pre-treated; a 2^{nd} process stage 2 consisting of a reactor 2 with at least one microwave unit 8A, in which the ammonia is stripped from the treated process material, and a third process stage 3, in which the fully treated process material is received;

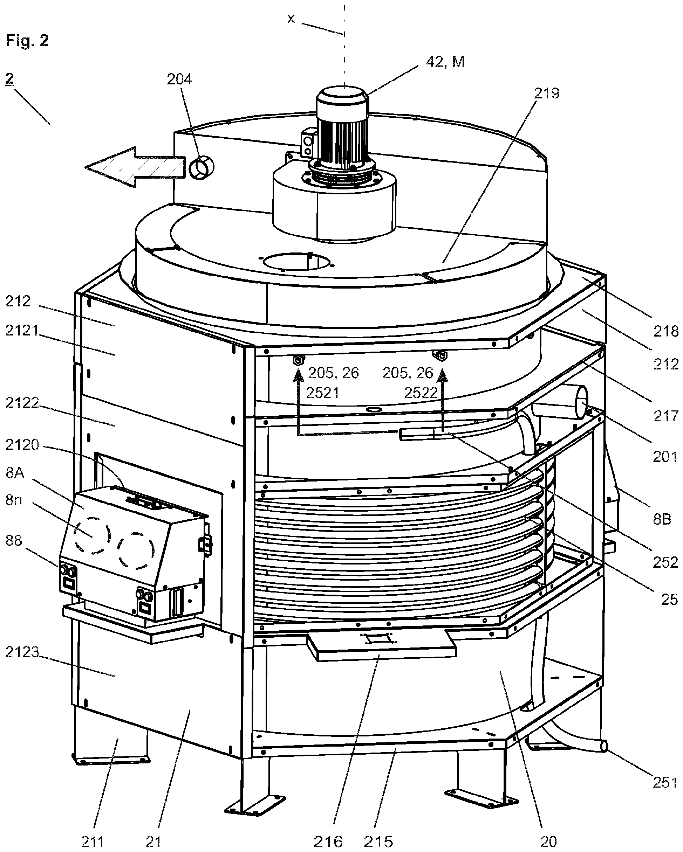

- Fig. 2: shows the reactor 2 of Fig. 1 in a preferred embodiment with a housing 21 that is partially removed to show the vessel 20 that serves for receiving the process material, sewage or waste, which is circulated through a microwave-transmissible transfer tube 25 coiled around the vessel 20 in front of one or more microwave units 8A, 8B; and

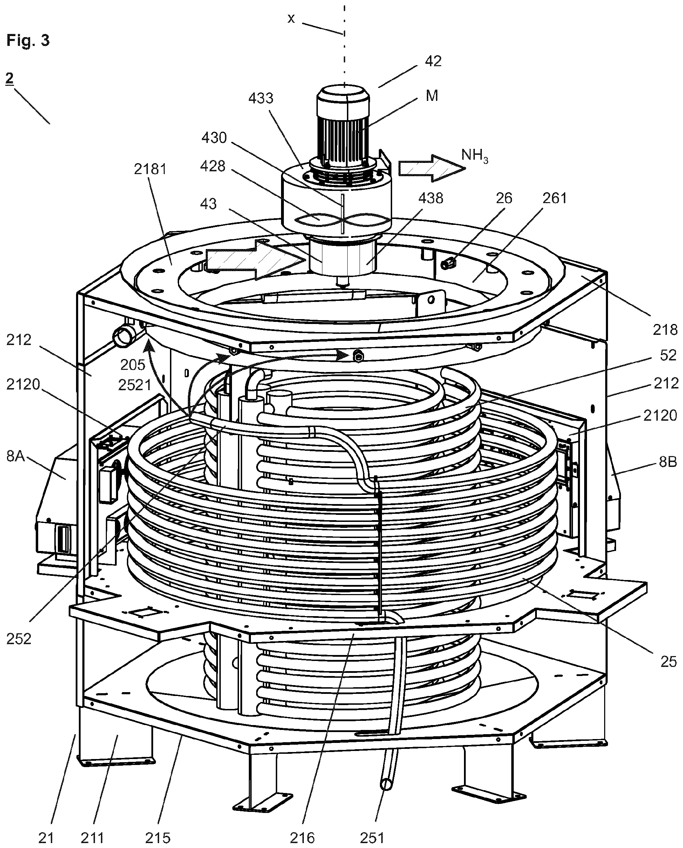

- Fig. 3: shows the reactor 2 of Fig. 2 after the removal of the vessel 20 with a gas pump 42 for removing ammonia enriched gases from the vessel 20.

### DETAILED DESCRIPTION OF THE PREFERRED EMBODIMENTS

Fig. 1 shows schematically an inventive apparatus 123 that comprises at least a 1^{st} process stage 1, in which the process material is pre-treated; a 2^{nd} process stage 2 consisting of a reactor 2, which is provided with at least one microwave unit 8A, in which the ammonia is stripped from the treated process material, and a third process stage 3, in which the fully treated process material is received.

Below, the inventive apparatus is described in embodiments which can be enhanced as required. Gas pumps 4, heaters 5, liquid pumps 6, valves 7 and motors M for operating these units are applied by the person skilled in the art as required and are shown as examples. In all stages bio-crack units and filters may be used as required.

The process material pm changes its properties and condition during the travel through the different stages of the apparatus 123 and is split in the reactor into a liquid part pm31 and an ammonia rich gaseous part pm32. Different indices are assigned to the process material pm at points where properties and condition change.

Process material pm0 to be treated is stored in a container or tank A0. From tank A0 the process material pm0 is transferred via input line L1, liquid pump 61 and preferably a bio-crack unit and/or a filter to a lower or primary segment 101 of a 1^{st} tank. In the storage space A1 of primary segment 101 the process material pm1 is exposed to thermal energy provided by process material pm51 contained in the storage space A5 of a 2^{nd} tank 30 and is preheated. From storage space A1 process material pm1 is rising to the upper or, where the process material pm2 is heated in storage space A2 by a heat exchanger 51. The heat exchanger 51 receives hot water 55 from a boiler 50, which contains a heater element 5, and returns the water with reduced temperature 56. The secondary segment 102 of the 1^{st} tank 10 is kept outside the 2^{nd} tank so that a heat transfer to the process material pm51 in the 2^{nd} tank 30 is avoided. In the secondary segment 102 of the 1^{st} tank 10 the process material pm2 reaches temperatures typically in the range from 40°C to 90°C.

Optionally a gas pump or air pump 41 may be provided, which forwards air through conduit 411 into the primary and/or secondary segment of the 1^{st} tank 10 for aeration or insufflation of the process material pm1, pm2. Gas pumps described here and below may be any devices suitable for conveying gaseous media. Such gas pumps may be provided in the embodiment of a fan.

Optionally, the process material pm1, pm2 and pm51 in the primary segment 101 and secondary segment 102 of the 1^{st} tank 10 and in the second tank 30, is circulated via loop line L6 and pump 64, via loop line L7 and pump 65, and loop line L9 and pump 66, respectively, primarily in order to optimize the heat transfer.

The 1^{st} tank 10 is shown open, but could also be closed or closable.

The 1^{st} process stage 1 of the apparatus 123 exhibits a most advantageous design and can therefore be implemented independently in other apparatuses used for stripping ammonia.

From the 1^{st} process stage 1, i.e. from the 1^{st} tank 10, heated process material pm2 is forwarded via transfer line L2 and optionally liquid pump 62 to the 2^{nd} process stage 2 in the embodiment of a reactor 2, i.e. to an inlet opening 201 of a vessel 20 of the reactor 2, which is the core of the inventive apparatus 123. As indicated in the drawing the transfer of process material may also be executed by the gravitational force so that pumps (e.g. pump 62) are not required in such locations.

In the reactor 2, i.e. in the vessel 20, the received process material pm2 is split into a liquid part pm31 and into a gaseous part pm32, which is transferred by a gas pump 42 through a conduit 421 and an outlet opening 204 of the vessel 20 and forwarded through a conduit 423 to an ammonia tank A6, where the gaseous ammonia pm32 may be stored in the same or a different state of aggregation pm42.

In this preferred embodiment a fraction of the gaseous part pm32 is forwarded via conduit 422 back into the vessel 20 and is circulated and preferably injected into a diffusion zone as described below. Circulation of the gaseous ammonia pm32 could also be effected by a separate gas pump.

Ammonia sensors 95 are provided, which measure the ammonia concentration in the gaseous part pm32 and/or in the liquid part pm31 within the vessel 20 and/or in the return or circulation line L8. Measured values are signalled via signal line sl to a control unit 99. The control unit 99, which comprises a control program, may receive signals from other sensors such as temperature sensors, pressure sensors, gas sensors, etc., and preferably observes and controls all processes executed in the apparatus 123. Via control lines cl gas pumps 4, heaters 5, liquid pumps 6, valves 7 as well as related motors M are controlled preferably via switching elements provided in a power supply unit 90.

Based on sensor signals sl received for example from the ammonia sensors 95 the control unit 99 can decide, whether the ammonia concentration in the gaseous part pm31 is above or below a desired level. Accordingly, the control unit 99 can proceed recirculating the gaseous part pm32 or forwarding the gaseous part pm32 towards the ammonia container A6. Accordingly the process unit can control one or more gates 94 through which the gaseous part pm32 is either recirculated or forwarded to the ammonia container A6. As described, separate circulation loops may be provided that are individually controlled.

Further, the control unit 99 can decide, whether the ammonia concentration in the liquid part pm31 is above or below a given level. In the event that the ammonia concentration in the liquid part pm31 is below said level, the liquid part pm31 can be forwarded to the third stage 3.

In a further preferred embodiment, the control unit 99 records curves or gradients of the sensor signals sl and uses this information in future process cycles for predicting when the ammonia concentration levels will be met. With each process cycle, which can be established for individually for different process material, such curves will get more reliable. By comparing a currently recorded curve with stored historical values or curves precise predictions can be made and corresponding information can be provided to the operator.

In storage space A3 of the vessel 20 the liquid part of process material pm31 is heated by a heat exchanger 52, which receives warm water 55 from boiler 50 and returns the water 56 with reduced temperature. Typical temperatures of the process material pm31 in the vessel 20 are in the range between 60°C and 100°C.

With the ammonia sensor 95 or any ammonia sensor provided in the vessel 20 the condition of the liquid part of the process material pm31 is observed. After completing treatment or ammonia stripping, process material pm31 is removed from the reactor 2, continuously or in batches. Process material pm31 can be transferred to the 2^{nd} tank directly via disposal line L3 or indirectly via disposal line L4 and intermediate tank A4. By opening valve 76 process material pm31 is transferred from the outlet opening 203 of the vessel 20 to the intermediate tank A4. By opening valve 77 process material pm41 is transferred from intermediate tank A4 to the 2^{nd} tank 30. In the embodiment shown, process material pm31 leaving the vessel 20 via an outlet opening 202 is forwarded via an outlet line L20 and a liquid pump 63 to a distributor 91, which comprises three outlet openings that can be opened or closed by assigned valves 72, 73 and 79, which can individually be controlled by the control unit 99.

By opening valve 73 the process material pm31 is transferred via disposal line L3 to the 2^{nd} tank 30. By opening valve 72 the process material pm31 is recirculated and forwarded via return or circulation line L8 and a transfer tube 25 to an inlet opening 205 of the vessel 20. By opening valve 79 the process material pm31 is recirculated and forwarded via a bio-crack unit 92, return line L8 and a transfer tube 25 to the inlet opening 205 of the vessel 20.

In the embodiments shown, the 2^{nd} tank is used for receiving process material pm31, pm 41 at a temperature, which may be well above 50°C. In order to avoid energy losses, the thermal energy of the process material pm51 located in storage space A5 of the 2^{nd} tank 30 is transferred to process material pm1 located in storage space A1 of the 1^{st} tank 10 as already described above. Subsequently, the cooled process material pm51 is transferred via output line L5 and valve V7 to a storage space in a terminal tank A5. The transfer of raw process material pm0 in tank A0 through the inventive apparatus 123 to terminal tank A6 is thus completed.

Return line L8 is connected to a 1^{st} end 251 of the transfer tube 25. The 2^{nd} end 252 of the transfer tube 25 or a nozzle 26 connected thereto is entered through inlet opening 205 into the vessel 20. Hence, outlet line 20, return line L8 and transfer tube 25 form a loop through which, driven by liquid pump 63, process material pm31 can be circulated similar as described for loop lines L6, L7 and L9 in the 1^{st} process stage 1.

It is further shown that a gas pump 42 is provided which circulates gas taken from the vessel 20 via conduits or gas pipes 422 and 421. Primary purpose of this gas circulation is to inject the circulated gas into at least one diffusion zone 27, preferably a plurality of diffusion zones 27 inside the vessel 20 into which the circulated process material 31 is injected from the 2^{nd} end piece 252 of the transfer tube 25 or the nozzle 26 connected thereto and circulated gas is injected via gas pipe 422. In this way aeration of the process material 31 is optimized. Aeration can be maximized by enlarging the diffusion zone 27 or providing a plurality of diffusion zones 27 at least one gas pipe 421 and a plurality of nozzles 26 connected to the 2^{nd} end of the transfer tube 25. Foam, which may occur in the diffusion zone(s) 27, is deflected back to the surface of the process material pm31 as described below.

Preferably, only one transfer tube 25 is present. However, two or more transfer tubes 25 may be forming separate circulation loops, each one exposed to microwave energy.

The transfer tube 25 is made at least partially, preferably completely of microwave-transmissible material. Such microwave-material and the resulting transfer tube 25 is preferably also pressure resistant and/or temperature resistant and/or elastic, such as Teflon ®, polypropylene, polymethylpentene, polysulfone, polyetherimide or any other microwave-transmissible polymer.

The process material pm31 transferred in the transfer tube 25 can therefore be exposed to microwave energy irradiated from microwave sources or microwave generators 81, 82, ..., 8n that are located in one or a plurality of microwave units 8, 8A.

The transfer tube 25 can be arranged in any suitable way, e.g. as a planar serpentine, as a planar coil adjacent to a plane, if sufficient space is available, or as a helical coil surrounding a volume in space, in which the vessel 20 is located, in order to minimize the dimensions of the apparatus. Furthermore, the transfer tube 25 can have any suitable regular or irregular cross-section, e.g. a circle or polygonal cross-section, with which the whole volume can be used.

In the embodiment shown in Fig. 1 the transfer tube 25 is arranged as a helical coil coiled around the vessel 20 with a plurality of windings. Almost the whole lateral area of the vessel 20 is covered by the transfer tube 25 with minimum space requirement. Factually, during operation a relatively small layer of process material pm31 is drawn around the vessel 20, which can be charged with microwave energy across the whole diameter. The transferred process material pm31 can therefore be treated over a large area with highest efficiency. Any part of this large area can be exposed to microwave generators 81, 82, ..., 8n. The inventive apparatus 123 allows therefore a very high scalability of applied microwave energy or microwave units 8, 8A, 8B with any number of microwave generators 81, 82, ..., 8n. Each microwave unit 8, 8A, 8B may contain one, two or more microwave generators 81, 82, ..., 8n.

Since the transfer tube 25 is surrounding the vessel 20 with minimum space requirement a housing 21 with a simple construction can be provided primarily for mounting the microwave units 8, 8A, 8B, ... and for creating a microwave chamber through which the transfer tube 25 is guided. Further, the housing 21 may serve for encasing, supporting and/or holding the vessel 20.

The housing 21 may comprise a single lateral wall 212 preferably adapted to the dimensions of geometry of the vessel 20 with an enlarged diameter that allows installation of the preferably coiled transfer tube 25 in a mounting space 210 left open between the housing wall 212 and the wall of the vessel 20.

In the event that the vessel 20 has a cylindrical form, then a housing 21 preferably with the form of a polygonal cross-section, preferably hexagonal or octagonal cross-section, can advantageously be used.

Fig. 1 schematically shows the housing 21 with the transfer tube 25 installed in the mounting space 210 and a microwave unit 8, 8A mounted on the right side of the housing 21. The hosing wall 212 has a window 2120 in front of the mounted microwave unit 8, 8A so that microwave energy emitted by the microwave generators 81, 82, ..., 8n (symbolically shown as arrows) can travel through the window 2120 towards the transfer tube 25, which consists of material or comprises microwave-transmissible material at least at the positions of the windows 2120.

Fig. 1 shows that microwave unit 8, 8A can easily be mounted and dismounted, e.g. by flanges, hooks, hinges or other mounting material.

Fig. 2 shows the reactor of Fig. 1 in a preferred embodiment with a housing 21 that is partially opened to show the vessel 20 that serves for receiving the process material pm, sewage or waste. As described above, the process material pm can be circulated through the transfer tube 25, which is coiled around the vessel 20 at a height at which microwave units 8A, 8B are mounted on the side walls 212 of the housing 21. The sidewalls 212 comprise windows 2120 through which microwave energy can be radiated towards the microwave-transmissible transfer coil 25 and preferably in the direction of the central longitudinal axis x of the reactor 2. The housing 21 has the form of a hexagon with six sidewalls 212. In this preferred embodiment, each sidewall 212 consists of or comprises three wall segments 2121, 2122, 2123 which are removable. The central wall segment 2122, on which microwave unit 8A is mounted, has a window 2120 through which microwave energy can be transferred. In this embodiment between one and six microwave units 8A, 8B, 8c, 8D, 8E, 8F can be mounted. In the event that on one sidewall 212 no microwave unit 8 is required, then a central wall segment 2122 is installed, that does not comprise a window 2120.

It can be seen that the microwave unit 8A, which is extending radially out from the reactor 2, is freely accessible and can conveniently be serviced, repaired or operated, e.g. by switches 88. In the event that the microwave unit 8A or one of its elements fails, then it can easily be dismounted without getting in contact with further device parts of the reactor 2 or even the process material pm. Contamination of device parts external to the vessel 20 by the process material pm is therefore avoided.

Fig. 2 further shows the 1^{st} end 251 and the 2^{nd} end 252 of the microwave-transmissible transfer tube 25. The 1^{st} end 251 is connected, directly or indirectly to the outlet opening 202 at the lower end of the vessel 20. The 2^{nd} end 252 is connected to a plurality of smaller tubes 2521, 2522 that are guided to separate inlet openings 205 of the vessel 20 and are preferably connected each to a nozzle 26 through which the process material is sprayed into the vessel 20. The inlet openings 205 in the vessel 20 and the nozzles 26 extending through the inlet openings 205 are preferably arranged equidistant in a plane along the circumference of the vessel 20. Consequently a plurality of diffusion zones 27 is provided, which together form a common broad annular diffusion zone at the upper end of the vessel 20. In this way aeration of the process material is optimized.

Further shown is inlet opening 201, through which the vessel 20 can be filled with process material pm arriving from the 1^{st} process stage 1. On top of the reactor 2 a gas pump 42 with a motor M is installed, with which ammonia enriched gas is pumped out of vessel 20 and transferred via outlet opening 204 to ammonia tank A6 (see Fig. 1).

In this embodiment, the housing 21 also serves for holding the vessel 20 distant from the ground. For the described purposes, the housing comprises columns 211, a bottom plate 215, a 1^{st} intermediate plate 216, a 2^{nd} intermediate plate 217, a top plate 218 for mounting the sidewalls 212 and for holding the coiled transfer tube 25. Further, a top cover 219 is provided, on which the gas pump 42 is mounted.

Fig. 3 shows the reactor 2 of Fig. 2 after the removal of the vessel 20 with a gas pump 42 for removing ammonia enriched gases from the vessel 20.

After removal of the vessel 20, the heat exchanger 52 is exposed. It is further shown, that the top over 218 comprises an annular flange 2181 on which the removed top cover 219 can be mounted.

The 2^{nd} end piece 252 of the transfer tube 25 with the smaller tubes 2521, 2522 and nozzles 26 connected thereto are shown. The nozzles 26 are mounted equidistant on a mounting ring 261.

After removal of the top cover 219, the gas pump 42, which serves for circulating ammonia enriched gas and for transferring ammonia enriched gas out of the vessel 20, is exposed. The gas pump 42 is shown in a preferred embodiment with a motor M having a motor axis 430 on which a fan 428, held inside a pump housing 433, and a separator 43 are rotatably mounted. The separator 43 comprises a plurality of palettes or blades 438 that are rotated when the motor axis 430 is turned and that are separated by gaps from one another, through which ammonia enriched gas pm32 can pass, while foam, liquid and solid parts are rejected by the rotating palettes or blades 438 when the separator 43 is turned together with the fan 428.

The palettes or blades 438 are preferably arranged in parallel to the motor axis 430, which preferably extends along the central longitudinal axis x of the reactor 2. However, the palettes or blades 438 may also be inclined at one end towards one another. Preferably, the palettes or blades 438 form a cylindrical or conical sidewall of a basket which is opened towards the pump housing 433. At the lower end, the separator or basket 43 may be closed, e.g. by a circular plate connected to the ends of the palettes or blades 438. Alternatively, the end pieces of the palettes or blades 438 can be bent towards one another and/or can be connected to one another.

### LIST OF REFERENCES

[1] Susan W. Gay, et al., Ammonia Emissions and Animal Agriculture, Virginia State University 2009
[2] Li Lin et al., Removal of ammonia nitrogen in wastewater by microwave radiation, Journal of Hazardous Materials, ELSEVIER, Amsterdam 2009
[3] IT-Patent B8152636
[4] EP2743234B1
[5] "Understanding ammonia sensors and their applications" published by GfG instrumentation (AP1002 2-25-13)
[6] WO201887398A1

## Claims

1. Apparatus (123) for treating a process material (pm), such as sewage or animal waste, and removing ammonia therefrom, with a reactor (2) comprising
- at least one microwave unit (8A, 8B) including at least one microwave generator (81) provided for transferring microwave energy to the process material (pm, pm31), and
- at least one vessel (20) having
- at least one inlet opening (201, 205) for receiving the process material (pm);
- at least one outlet opening (202, 203) for removing or circulating the treated process material (pm, pm31); and
- at least one exit channel (204) for removing ammonia enriched gases stripped from the process material (pm, pm32);
**characterized in that** at least one transfer tube (25) is provided,
- which is made from microwave-transmissible material;
- which is connected with at least one 1^{st} end (251) to one of the outlet openings (202) of the vessel (20);
- which is connected with at least one 2^{nd} end (252) to one of the inlet openings (205) of the vessel (20);
- which is arranged at least partially in front of the at least one microwave unit (8A, 8B) so that microwave energy is transferable to the transferred process material (pm, pm31); and
that a pump (63) is provided, with which the process material (pm, pm31) is transferable through the at least one transfer tube (25).

2. Apparatus (123) according to claim 1, **characterized in that** the transfer tube (25) is coiled around the vessel (20) with a plurality of windings.

3. Apparatus (123) according to claim 1 or 2, **characterized in that** the vessel (20) is at least partially surrounded by a preferably polygonal housing (21) comprising a single part or multipart housing wall (212) that preferably comprises fixed or removable wall segments (2121, 2122, 2123) and that is separated from the vessel (20) by a radiation chamber (210), in which the transfer tube (25) is arranged and exposed to the at least one microwave unit (8A, 8B).

4. Apparatus (123) according to claim 3, **characterized in that** the at least one microwave unit (8A, 8B) is mounted in front of a window (2120) on the housing wall (212).

5. Apparatus (123) according to one of the claims 1 - 4, **characterized in that** at least two microwave units (8A, 8B) are mounted on the outside of the reactor (2) on the housing wall (212) preferably on fixed or removable wall segments (2121, 2122, 2123), which comprise a window (2120) though which the at least one microwave unit (81) is facing the inside of the reactor (2).

6. Apparatus (123) according to one of the claims 1 - 5, **characterized in that** means are provided inside or outside of the vessel (20) for mixing and/or heating and/or aeration and/or circulation, which circulation is executed via the transfer tube (25) and possibly further circulation lines.

7. Apparatus (123) according to one of the claims 1 - 6, **characterized in**
a) **that** at least one an gas pipe (421), that is connected to a gas pump (42) located outside of the vessel (20), and the 2^{nd} end (252) of the transfer tube (25) or a nozzle (26) connected thereto are extending into a diffusion zone (27) inside of the vessel (20), where recirculated process material (pm, pm32) is exposed to a flow of gas or air (pm32), or
b) **that** at least one an gas pipe (421), that is connected to a gas pump (42) located outside of the vessel (20), and a plurality of tubes (2521, 2522) exiting from the 2^{nd} end (252) or nozzles (26) connected thereto are extending each into a diffusion zone (27) inside of the vessel (20), where recirculated process material (pm) is exposed to a flow of gas or air (pm32).

8. Apparatus (123) according to one of the claims 1 - 7, **characterized in that** a gas pump (42), particularly a fan, with which ammonia is transferable via the exit channel (204) towards an ammonia concentration tank (A6), is mounted at the top of the reactor (2).

9. Apparatus (123) according to one of the claims 1 - 8, **characterized in that** a separator (432) is provided adjacent to the exit channel (204) with a motor (M) and a motor axis (430) with which palettes or blades (438) are rotatably held that are arranged in parallel or inclined to the motor axis (430) and that are preferably forming a cylindrical or conical basket, with gaps between the palettes or blades (438) allowing gas to pass through the gaps and rejecting foam, liquid and solid particles of the process material (pm, pm31) by the rotating palettes or blades (438).

10. Apparatus (123) according to one of the claims 1 - 9, **characterized in that** process material (pm) to be treated is entered via a 1^{st} transfer line (L1) into a primary tank (10), in which it is mixed and/or heated and/or aerated and/or circulated, before it is forwarded via a 2^{nd} transfer line (L2) and possibly via a 1^{st} valve (71) to one of the inlet openings (201) of the vessel (20) of the reactor (2).

11. Apparatus (123) according to one of the claims 1 - 10, **characterized in that** treated process material (pm, pm31) is forwarded from the vessel (20) to a secondary tank (30) directly via a third transfer line (L3) or indirectly via a fourth transfer line (L4) and an intermediate tank (A4).

12. Apparatus (123) according to one of the claims 1 - 11, **characterized in that** the pump (63) is connected via an outlet line (L20) of the vessel (20) to a distributor (91),
a) which is connected via a 2^{nd} valve (72) to the transfer tube (25), and/or
b) which is connected via a 9^{th} valve (79) and a bio-crack unit (92) to the transfer tube (25), and/or
c) which is connected via a 3^{rd} valve (73) to the 3^{rd} transfer line (L3).

13. Apparatus (123) according to one of the claims 10 - 12, **characterized in that** the primary tank (10) is extending into the secondary tank (30), so that thermal energy is transferable from the secondary tank (30) to the primary tank (10).

14. Apparatus (123) according to one of the claims 10 - 13, **characterized in that** the primary tank (10) comprises a lower primary tank segment (101), into which the 1^{st} transfer line (L1) is extending and an upper secondary tank segment (102), in which a heat exchanger (51) is arranged.

15. Apparatus (123) according to one of the claims 1- 14, **characterized in that** a control unit (99) with a control program is provided, with which the functional devices (4, 5, 6, 7, 8) are controllable and/or that at least one sensor (95), with which the ammonium concentration of the liquid process material (pm31) and/or gaseous process material (pm32) is measured, is connected to the control unit (99), which controls the treatment and/or transfer and/or circulation of the process material (pm31, pm32) accordingly.
